# EUROPÄISCHE PATENTSCHRIFT

(11) **EP 0 642 035 B1**
(45) Veröffentlichungstag und Bekanntmachung des Hinweises auf die Patenterteilung: **27.12.2000**
(21) Anmeldenummer: 94113943.8
(22) Anmeldetag: 06.09.1994
(51) Int. Cl.: G01S 7/539, G01S 7/41

(54) **Verfahren zur Interpretation von Messdaten welche an einer auf Wellenreflexion basierenden Stereosensoranordnung anfallen**
Method for interpretation of measurement values, measured by stereo sensing apparatus using reflection of waves
Méthode d'interprétation de données de mesure, mesurés par un appareil capteur à stéréo, employant réflexion d'ondes

(30) Priorität: 08.09.1993 DE 4330470
(43) Veröffentlichungstag der Anmeldung: 08.03.1995
(73) Patentinhaber: BSH Bosch und Siemens Hausgeräte GmbH, 81669 München (DE)
(72) Erfinder: Nelson, Eric, Surrey, B.C. V3S 7A8 (CA)

(56) Entgegenhaltungen:
- PEREMANS H ET AL: "A HIGH-RESOLUTION SENSOR BASED ON TRI-AURAL PERCEPTION" IEEE TRANSACTIONS ON ROBOTICS AND AUTOMATION, Bd. 9, Nr. 1, 1.Februar 1993, NEW YORK, USA, Seiten 36-48, XP000381548
- BECKERMAN M AND OBLOW E M: " Treatment of systematic errors in the processing of wide-angle sonar " IEEE TRANSACTIONS ON ROBOTICS AND AUTOMATION, Bd. 6, Nr. 6, 1.April 1990, NEW YORK, USA, Seiten 137-145, XP002042937
- LEONARD J J ET AL: "DYNAMIC MAP BUILDING FOR AN AUTONOMOUS MOBILE ROBOT" INTERNATIONAL JOURNAL OF ROBOTICS RESEARCH, Bd. 11, Nr. 4, 1.August 1992, CAMBRIDGE, USA, Seiten 286-298, XP000297169
- BOZMA O ET AL: "BUILDING A SONAR MAP IN A SPECULAR ENVIRONMENT USING A SINGLE MOBILE SENSOR" IEEE TRANSACTIONS ON PATTERN ANALYSIS AND MACHINE INTELLIGENCE, Bd. 13, Nr. 12, 1.Dezember 1991, NEW YORK, USA, Seiten 1260-1269, XP000248351

## Beschreibung

Die Erfindung bezieht sich auf ein Verfahren zur Interpretation von Meßdaten, welche an einer auf Wellenreflexion basierenden Stereosensoranordnung anfallen, bei dem anhand der Meßdaten ein Umgebungsmodell der Sensoranordnung erstellt wird, welches mindestens als Objekte Kanten und Flächen in der Umgebung enthält, wobei die Lage der Objekte mindestens durch ihren Winkel und ihre Entfernung zur Sensoranordnung bestimmt ist und bei dem mindestens eine Kante hinter einer Fläche und/oder eine Fläche hinter einer Fläche im Umgebungsmodell unterdrückt wird.

Die Erfindung bezieht sich somit auf die Interpretation der Daten eines modellbasierten Stereosensorsystems mit Amplitudeninformation. Solche Sensoren können beispielsweise an selbstbeweglichen mobilen Einheiten eingesetzt werden, um in Verbindung mit einem Rechner dieser selbstbeweglichen Einheit eine Umgebungskarte zur Verfügung zu stellen. Als Beispiel für solche selbstbewegliche mobilen Einheiten seien Haushaltsroboter, autonome Transportfahrzeuge, Reinigungsgeräte oder Fernerkundungssonden genannt.

Aus Peremans, H. et al.: 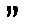 A High-Resolution Sensor Based On Tri-Aural Perception" IEEE Transactions On Robotics And Automation, Bd. 9, Nr. 1, Februar 1993, New York, USA, S. 36 - 48 ist ein derartiges Stereosensorsystem bekannt. Bei diesem Stereosensorsystem wird Ultraschall von einem Sender gesendet und mit drei Empfängern empfangen. Neben der Ankunftszeit der Echos wird auch ihre Amplitude ausgewertet. Die Echos in den drei Kanälen werden in Tripeln oder Tupeln einander zugeordnet, und das Sensorsystem sucht für jedes dieser Tripel oder Tupel die plausiblere unter den Erklärungen 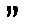 Kante" oder 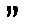 Wand". Durch dieses Sensorsystem werden wesentlich mehr Tripel oder Tupel erzeugt, als tatsächlich Objekte im Meßbereich des Sensorsystems liegen. Entsprechend viele Einträge in einer Liste von Kanten und Wänden, welche das Sensorsystern liefert, sind demnach ungültig. Dies bedeutet, daß man ein sehr ungenaues Bild der Umgebung erhält. Das Umgebungsmodell einer mobilen Einheit ist relativ ungenau, wenn sie sich mit einem solchen Sensorsystem orientiert. Dies hat zur Folge, daß bei der Bewegung der mobilen Einheit in einer Umgebung mit einem solchen Umgebungsmodell mehr Berechnungen angestellt werden müssen, als dies mit einem exakten Umgebungsmodell der Fall wäre. Insbesondere entstehen auch durch Reflexionen schwache Echos, die sich störend auf das Umgebungsmodell auswirken.

Es ist die Aufgabe der Erfindung, das eingangs genannte Verfahren zur Interpreation von Meßdaten derart zu verbessern, daß man ein genaueres Umgebungsmodell eines modellbasierenden Stereosensorsystems erhält.

Erfindungsgemäß wird diese Aufgabe dadurch gelöst, daß ein solches Objekt im Umgebungsmodell unterdrückt wird, von dem an zumindestens einem Sensor der Sensoranordnung eine Amplitude unterhalb eines Schwellenwertes gemessen wird.

Gemäß der Erfindung werden Objekte, von denen der Sensor nur schwache Echos erhält, unterdrückt.

Ein Vorteil des erfindungsgemäßen Verfahrens besteht darin, daß es das Umgebungsmodell verbessert, indem Meßwerte, die von Objekten stammen, welche der Sensor nicht sehen kann, eliminiert werden.

Weiterhin ist es günstig, daß beim erfindungsgemäßen Verfahren Objekte, von denen der Sensor nur schwache Echos erhält, unterdrückt werden.

Vorteilhaft werden beim erfindungsgemäßen Verfahren falsch gruppierte Meßwertgruppen eliminiert, indem überprüft wird, ob die gleiche, von einem Sensor gemessene Entfernung (oder Signallaufzeit), zwei Objekten bzw. Signalgruppen zugeordnet wurde. In diesem Falle werden die Amplituden aller Signale in den Signalgruppen bewertet und die Wahrscheinlichkeit ausgenutzt, daß das Objekt, welches der am höchsten bewerteten Signalgruppe entspricht, jenes ist, dessen Meßwertgruppe nicht fehlerhaft ist.

Besonders vorteilhaft ist es, bei einer Messung mit Drei Sensoren nach dem erfindungsgemäßen Verfahren auch den mittleren Medianwert einer Gruppe von Meßwerten der Amplitudensumme hinzu zu addieren, um Gruppen, die falsche Meßwerte enthalten, zu eliminieren.

Besonders günstig ist es, nach dem erfindungsgemäßen Verfahren die Evaluation von Meßwertgruppen mit einer Evaluationsfunktion durchzuführen, welche berücksichtigt, in welcher Lage sich der Sensor zum Objekt befindet. So wird wie erfindungsgemäß vorgesehen vermieden, daß einem Objekt eine Meßwertgruppe zugeordnet wird, in der eine unplausible Amplitudenfolge gruppiert ist. Dabei wird ausgenutzt, daß es physikalisch unwahrscheinlich ist, daß ein Sensor nahe an einem Objekt liegt und trotzdem ein Echo mit einer geringen Amplitude von diesem Objekt erhält.

Weiterhin ist es günstig, wie im erfindungsgemäßen Verfahren vorgesehen, die Evaluation von Meßwertgruppen in Abhängigkeit des Objektwinkels und des Abstandes des Objekts zum Sensor durchzuführen, so daß mit größerem Abstand und größerem Winkel die Meßwerte als ungenauer und somit mit geringerem Evaluationsfaktor gewichtet werden.

Günstig ist es, mit dem erfindungsgemäßen Verfahren selbstbewegliche mobile Einheiten auszustatten und mit Hilfe dieses erfindungsgemäßen Verfahrens für diese mobilen Einheiten, während sie sich bewegen, eine Umgebungskarte zu erstellen. Durch das genauere Umgebungsmodell kann eine solche selbstbewegliche Einheit besser manövrieren und benötigt für die Verarbeitung der Umgebungskarte und die Festlegung eines Weges in der Umgebung eine geringere Rechenleistung. Sie kann somit genauer in der Umgebung manövrieren.

Im folgenden wird die Erfindung anhand von Figuren weiter erläutert.
Figur 1 zeigt als Beispiel eine falsche Wand in einem Umgebungsmodell.
Figur 2 zeigt als Beispiel eine falsche Kante in einem Umgebungsmodell.
Figur 3 zeigt eine selbstbewegliche mobile Einheit in einem Umgebungsmodell mit und ohne Anwendung des erfindungsgemäßen Verfahrens.

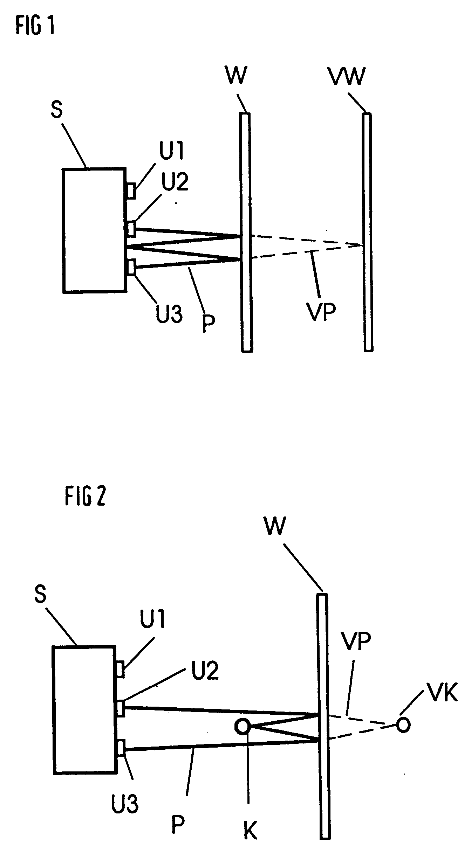

In Figur 1 ist eine Sensoranordnung S dargestellt, die beispielsweise auf einem Roboter oder einer selbstbeweglichen mobilen Einheit eingebracht sein kann. Weiterhin sind eine Wand W und eine virtuelle Wand VW gezeigt. Im übrigen sind an der Sensoreinheit drei Sensoren U1 bis U3 vorhanden. Exemplarisch ist ein Schallgang P und VP dargestellt.
Durch Figur 1 wird noch einmal das grundsätzliche Problem einer solchen Sensoranordnung veranschaulicht, die Sensoranordnung kann sich nur auf die Meßwerte, welche an den Sensoren anfallen stützen, da sie a priori die Umgebung nicht kennt. So zeigt Figur 1 anhand der Pfade P und VP, sowie der Wand W und der virtuellen Wand VW Interpretationsmöglichkeiten ein- und derselben Meßwerte. Und zwar tritt hier das Problem der Doppelreflexion an der Sensoranordnung auf. Der Pfad P, der den Schallgang eines vom Sensor U2 abgestrahlten Schallsignals darstellt, trifft zum einen an der Wand W auf und wird von dieser reflektiert, trifft nochmals an der Sensoranordnung zwischen Sensor U2 und U3 auf und wird von dieser reflektiert und erreicht anschließend erst den Empfangssensor U3, so daß sich durch diese Doppelreflexion eine verlängerte Laufzeit des Schallsignales ergibt. Diese Meßwerte werden nun so interpretiert, als wurde sich hinter der Wand W eine virtuelle Wand VW befinden. Das erfindungsgemäße Verfahren vermeidet nun solche Fehlinterpretationen, da physikalische Zusammenhänge ausgenutzt werden und der Sachverhalt, daß eine Wand hinter einer Wand, wie hier beispielhaft veranschaulicht, von einem Ultraschallsensor nicht gesehen werden kann eingebunden wird.

Dies fuhrt zur Elimination dieser Wand im Umgebungsmodell der Sensoranordnung.

Bei der Anwendung des erfindungsgemäßen Verfahrens wird hier nur exemplarisch ein Ultraschallsensor gezeigt. Es ist jedoch auch denkbar, das andere, wellenförmige Signale abstrahlender Sensoren, Verwendung finden könnten, da ähnliche Probleme beispielsweise auch bei optischen Sensoren auftreten können.

Figur 2 zeigt wie nach dem erfindungsgemäßen Verfahren virtuelle Kanten eliminiert werden könnten. Hierbei tritt analog zu Figur 1 auch wieder das Problem einer Doppelreflexion auf. Hier sind, wie in Figur 1, beispielsweise an einer Sensoranordnung Sensoren U1 bis U3 angebracht. Ein Sensor U2 strahlt ein beispielsweise Ultraschallsignal ab, welches an einer Wand W reflektiert wird und über eine Kante K, an der es wiederum reflektiert wird, wieder zur Wand gelangt und von dort zunächst zum empfangenden Sensor U3. Dieser Schallpfad ist mit P bezeichnet. Die Verarbeitungseinheit, welche Meßsignale der Sensoren erhält, kann nicht erkennen, daß die Schallaufzeit nicht von einer Kante herrührt, welche sich am Ort VK befindet.

Vorteilhaft nutzt das erfindungsgemäße Verfahren aus, daß eine Kante, die sich hinter einer Wand befindet, beispielsweise ein Stuhlbein oder ein Tischbein nicht von einem Ultraschallsensor detektiert werden kann. Dieser Sachverhalt wird ausgenutzt, um solche Kanten im Umgebungsmodell zu unterdrücken.

Neben der Eliminierung von Kanten hinter Wänden und Wänden hinter Wänden durch das erfindungsgemäße Verfahren ist es auch weiterhin vorgesehen, von zwei Meßwertgruppen, welche gleiche Entfernungswerte enthalten, die falsche zu eliminieren. Dabei wird so vorgegangen, daß die Amplitudenwerte aufsummiert werden und der Sachverhalt ausgenutzt wird, daß die Lage eines Objektes welches ein intensiveres Echo liefert auch mit größerer Genauigkeit durch jene Meßwertgruppe beschrieben wird, welche die höhere Amplitudensumme aufweist. Weiterhin wird mit dem erfindungsgemäßen Verfahren vorteilhaft ausgenutzt, daß ein Sensor, der schräg auf ein Objekt schaut, dieses Objekt nicht mehr so genau detektieren kann und deswegen wird ein Abschlag im Bewertungsfaktor von Meßwertgruppen, der winkelabhängig ist, berücksichtigt. Analog dazu wird die Entfernung des Sensors zum Objekt berücksichtigt und ein Schwellenwert für Meßsignale in Abhängigkeit der Entfernung zum Sensor definiert, um so mit einzubeziehen, daß weiter entfernte Objekte ungenauer detektiert werden können.

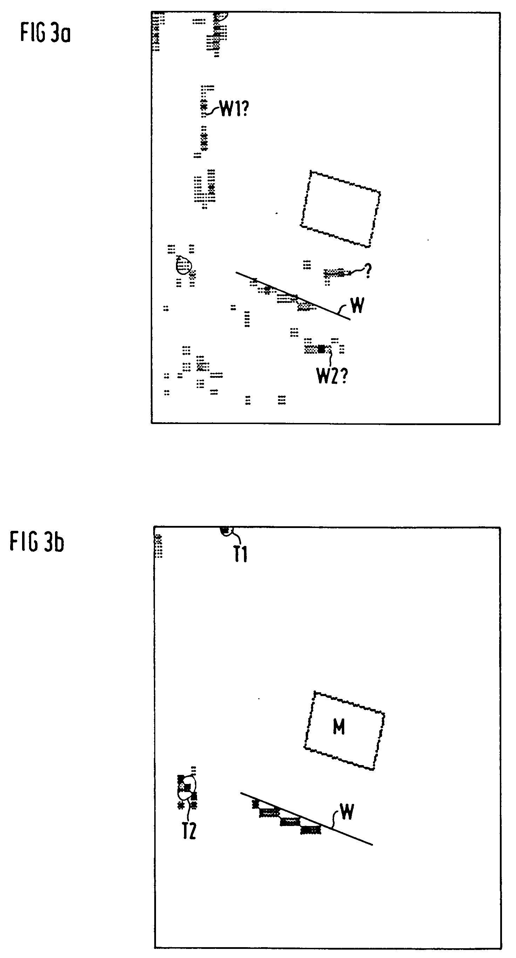

Figur 3 zeigt eine selbstbewegliche Einheit und ein Umgebungsmodell der selbstbeweglichen Einheit einmal ohne und einmal mit Anwendung des erfindungsgemäßen Verfahrens.

Figur 3a zeigt eine selbstbewegliche Einheit M in einer Umgebung mit einer Wand W2?, einer Wand W1?, einer Wand W und einem nicht identifizierten Objekt ?. Figur 3b zeigt dieselbe selbstbewegliche mobile Einheit M in der gleichen Umgebung mit einem Umgebungsmodell, welches durch Anwendung des erfindungsgemäßen Verfahrens verbessert wurde, indem bestimmte Details durch Filtern unterdrückt wurden. Im Vergleich zu Figur 3a erkennt man, daß die Wand W1? nicht vorhanden war und daß stattdessen ein Tischbein T1 existiert. Des weiteren wurde die Wand W2? eliminiert und es existiert nur noch die Wand W. Zusätzlich konnte das nicht detektierte Objekt ? aus Figur 3a ausgefiltert werden. Ganz deutlich erkennt man auch nach Anwendung des erfindungsgemäßen Verfahrens ein zweites Tischbein T2 in Figur 3b.

## Patentansprüche

1. Verfahren zur Interpretation von Meßdaten, welche an einer auf Wellenreflexion basierenden Stereosensoranordnung (S) anfallen,
a) bei dem anhand der Meßdaten ein Umgebungsmodell der Sensoranordnung (S) erstellt wird, welches mindestens als Objekte Kanten (K) und Flächen (W) in der Umgebung enthält, wobei die Lage der Objekte mindestens durch ihren Winkel und ihre Entfernung zur Sensoranordnung (S) bestimmt ist,
b) und bei dem mindestens eine Kante (K) hinter einer Fläche (W) und/oder eine Fläche (W) hinter einer Fläche (W) im Umgebungsmodell unterdrückt wird, dadurch gekennzeichnet, daß ein solches Objekt im Umgebungsmodell unterdrückt wird, von dem an mindestens einem Sensor (U1 - U3) der Sensoranordnung (S) eine Amplitude unterhalb eines Schwellenwertes gemessen wird.

2. Verfahren nach Anspruch 1,
a) bei dem die von mehreren Sensoren der Sensoranordnung zu einem Objekt gemessenen Meßdaten in einer Gruppe zusammengefaßt werden,
b) bei dem mindestens zwei Gruppen bezüglich identischer Entfernungswerte überprüft werden,
c) und bei dem das Objekt jener Gruppe mit einem identischen Entfernungswert im Umgebungsmodell unterdrückt wird, deren Summe von Amplitudenwerten, die Amplitudensumme, geringer ist.

3. Verfahren nach Anspruch 2, bei dem Meßdaten von drei Sensoren zusammengefaßt werden und bei dem zur Amplitudensumme der Medianwert der Amplitudenwerte addiert wird, sodaß sich ein Evaluationswert ergibt, wobei das Objekt jener Gruppe mit dem geringeren Evaluationswert im Umgebungsmodell unterdrückt wird.

4. Verfahren nach Anspruch 3, bei dem auf die je Objekt gemessenen Amplitudenwerte eine Evaluationsfunktion angewendet wird, bei der die Lage eines Objektes im Verhältnis zu einem ersten Sensor der Sensoranordnung derart berücksichtigt wird, daß ein Objekt welches im Umgebungsmodell nah beim ersten Sensor liegt, von dem aber nur ein Amplitudenwert unterhalb eines Schwellenwertes am Sensor gemessen wird, einen verringerten Evaluationswert bekommt.

5. Verfahren nach Anspruch 4, bei dem falls der Winkel zum Objekt mehr als zehn Grad beträgt, der Evaluationswert halbiert wird.

6. Verfahren nach einem der voranstehenden Ansprüche, welches in einer selbstbeweglichen mobilen Einheit zum Einsatz kommt, wobei die Stereosensoranordnung an der Einheit angebracht ist und ein Umgebungsmodell der Umgebung dieser Einheit dynamisch erstellt wird und die Einheit selbsttätig unter Zuhilfenahme des Verfahrens in der Umgebung manövriert.

## Claims

1. Method for the interpretation of measurement data which arises at a stereo sensor arrangement (S) based on a wave reflection,
a) in which on the basis of the measurement data an environment model, which comprises at least edges (K) and surfaces (W) as objects in the environment, of the sensor arrangement (S) is created, wherein the position of the objects is determined at least by their angle and their distance from the sensor arrangement (S),
b) and in which at least one edge (K) behind a surface (W) and/or a surface (W) behind a surface (W) is or are suppressed, characterised in that there is suppressed in the environment model such an object of which an amplitude below a threshold value is measured at at least one sensor (U1 to U3) of the sensor arrangement (S).

2. Method according to claim 1,
a) in which the data measured by several sensors of the sensor arrangement with respect to one object are combined into a group,
b) in which at least two groups are checked with respect to identical distance values,
c) and in which the object of that group with an identical distance value in the environment model is suppressed, the sum of amplitude values - the amplitude sum - of which is smaller.

3. Method according to claim 2, in which measurement data from three sensors are combined and in which the median value of the amplitude values is added to the amplitude sum, so that an evaluation value results, wherein the object of that group with the smallest evaluation value in the environment model is suppressed.

4. Method according to claim 3, in which there is used on the amplitude values measured per object an evaluation function in which function the position of an object in relation to a first sensor of the sensor arrangement is taken into consideration in such a manner that an object which in the environment model lies near the first sensor, but from which only an amplitude value below a threshold value is measured at the sensor, is given a reduced evaluation value.

5. Method according to claim 4, in which the evaluation value is halved for the case that the angle relative to the object amounts to more than ten degrees.

6. Method according to one of the preceding claims, which is for use in a self-moving mobile unit, wherein the sensor arrangement is mounted at the unit and an environment model of the environment of this unit is dynamically created and the unit is automatically manoeuvred in the environment with the assistance of the method.

## Revendications

1. Procédé en vue de l'interprétation de données de mesure obtenues sur un agencement de capteurs stéréo (S) basé sur la réfection d'ondes,
a) dans lequel on établit au moyen des données de mesure un modèle d'environnement de l'agencement de capteurs (S) qui contient comme objets au moins des arêtes (K) et des surfaces (W) présentes dans l'environnement, la position des objets étant déterminée au moins par leur angle et par leur distance par rapport à l'agencement de capteurs (S),
b) et dans lequel au moins une arête (K) située derrière une surface (W) et/ou une surface (W) située derrière une surface (W) sont éliminées dans le modèle d'environnement, caractérisé en ce qu'un tel objet depuis lequel une amplitude mesurée sur au moins un capteur (U1 - U3) de l'agencement de capteurs (S) et située en dessous d'une valeur de seuil est éliminé du modèle d'environnement.

2. Procédé selon la revendication 1,
a) dans lequel les données de mesure mesurées par plusieurs capteurs de l'agencement de capteurs pour un objet sont rassemblées dans un groupe,
b) dans lequel au moins deux groupes concernant des valeurs identiques de distance sont vérifiés
c) et dans lequel l'objet du groupe dont la somme des valeurs d'amplitudes, à savoir la somme des amplitudes, est plus petite, pour une même valeur de la distance, est éliminé du modèle d'environnement.

3. Procédé selon la revendication 2, dans lequel des valeurs de mesure de trois capteurs sont rassemblées, et dans lequel la valeur médiane des valeurs d'amplitude est ajoutée à la somme des amplitudes, de sorte que l'on obtient une valeur d'évaluation, tandis que l'objet du groupe qui présente la plus petite valeur d'évaluation est éliminé du modèle d'environnement.

4. Procédé selon la revendication 3, dans lequel, pour chaque valeur d'amplitude mesurée sur un objet, on utilise une fonction d'évaluation dans laquelle la position d'un objet par rapport au premier capteur de l'agencement de capteurs est prise en compte de telle sorte qu'un objet qui est proche du premier capteur dans le modèle d'environnement, mais depuis lequel on ne mesure sur le capteur qu'une valeur d'amplitude située en dessous d'une valeur de seuil, reçoit une valeur d'évaluation plus faible.

5. Procédé selon la revendication 4, dans lequel, au cas où l'angle par rapport à l'objet vaut plus de dix degrés, la valeur d'évaluation est divisée par deux.

6. Procédé selon l'une des revendications précédentes, utilisé dans une unité mobile à déplacement autonome, l'agencement de capteurs stéréo étant installé sur l'unité et un modèle d'environnement de l'environnement de cette unité étant établi de manière dynamique, et l'unité manoeuvrant automatiquement dans l'environnement en s'aidant du procédé.
